# EUROPÄISCHE PATENTANMELDUNG

(11) **EP 2 255 945 A1**
(43) Veröffentlichungstag der Anmeldung: **01.12.2010**
(21) Anmeldenummer: 10161019.4
(22) Anmeldetag: 26.04.2010
(51) Int. Cl.: B29C 45/82, F04B 9/105, F04B 49/06

(54) **Elektrisch betriebene hydraulische Antriebseinrichtung als Nebenaggregat für eine Spritzgießmaschine**

(30) Priorität: 05.05.2009 DE 102009020046
(71) Anmelder: KraussMaffei Technologies GmbH, 80997 München (DE)
(72) Erfinder: Urbanek, Otto, 4910 Ried im Innkreis (AT); Huster, Gernot, 86438 Kissing (DE)
(74) Vertreter: Zollner, Richard

(57) **Zusammenfassung**

Die vorliegende Erfindung betrifft eine elektrisch betriebene hydraulische Antriebseinrichtung als Nebenaggregat einer Spritzgießmaschine, beispielsweise für die Schließeinheit einer Spritzgießmaschine, die ausgebildet ist, um von einer Steuereinrichtung Steuerbefehle zu erhalten und die zumindest einen Hydraulikausgang umfasst, der mittels einer Hydraulikleitung mit zumindest einem Betätigungselement der Spritzgießmaschine verbunden ist.

Zur Darstellung einer einfach aufgebauten, leisen, kostengünstigen und betriebseffizienten Antriebseinrichtung als Nebenaggregat einer Spritzgießmaschine wird die Verwendung einer Zahnradpumpe zur Erzeugung der Hydraulikversorgung vorgesehen, die von einem Servomotor beaufschlagt ist und mit Zwischenschaltung einer Richtungs-Ventileinrichtung unmittelbar mit dem Hydraulikausgang verbunden ist.

## Beschreibung

Die vorliegende Erfindung betrifft eine elektrisch betriebene hydraulische Antriebseinrichtung als Nebenaggregat für eine Spritzgießmaschine gemäß dem Oberbegriff des Anspruchs 1.

Insbesondere bei elektrisch betriebenen Spritzgießmaschinen, insbesondere bei sogenannten vollelektrischen Spritzgießmaschinen mit elektrischen Direktantrieben, ist es bekannt, verschiedene Sonderbaugruppen und spezielle Zusatzeinrichtungen der Spritzgießmaschine bei Bedarf mittels eines gesonderten hydraulischen Antriebs anzutreiben, welcher beispielsweise als Nebenaggregat beigestellt wird. So können Kernzüge in einem Werkzeug als Beispiel für die Anwendung einer solch hydraulische Beaufschlagung genannt werden, wogegen der Rest einer solchen Spritzgießmaschine, beispielsweise die Plastifizier- und Einspritzeinheit, die Schließeinheit etc. rein elektrisch, also mit einem Direktantrieb angetrieben werden.

Zur Realisierung eines solch gesonderten hydraulischen Antriebes wird zumeist ein elektrisch betriebenes Nebenaggregat beigestellt, welches meist eine mittels eines Elektromotors betriebenen Pumpeneinrichtung in Form einer Axial- oder Kolbenpumpe mit Steuerventilen und eventuell noch einer Speichereinrichtung aufweist. Solche Nebenaggregate sind jedoch aufwändig, insbesondere teuer, laut und benötigen in der Regel auch ein signifikantes Ölvolumen. Besonders nachteilig ist, dass die Steuerventile aufgrund ihrer Ventilwirkung einen schlechten Wirkungsgrad besitzen.

Die DE 196 80 008 C1 beschreibt eine Vorrichtung mit wenigstens einem kontrollierten hydraulisch angetriebenen Aktuator, einer hydraulischen Pumpe und einer Steuer-/Regel-Einrichtung. Die Steuer-/Regeleinrichtung wirkt aufgrund erfasster Aktuatordaten ausschließlich auf den elektrischen Antrieb der hydraulischen Pumpe, wobei die Pumpe zu wenigstens einem Aktuator führt. Die Hydraulikpumpe wird derart betrieben, dass kein Lastwechsel erfolgt und arbeitet nur im Zwei-Quadrantbetrieb.

Aufgabe der vorliegenden Erfindung ist es, für einzelne Anwendungen im Bereich einer Spritzgießmaschine eine hydraulische Antriebseinrichtung als Nebenaggregat anzugeben, welches besonders einfach und damit kostengünstig, funktionssicher, wartungsfreundlich und bedienerfreundlich konstruiert sowie leise und energieeffizient ist.

Die Lösung dieser Aufgabe wird durch die im Anspruch 1 genannten Merkmale gelöst.

Demgemäß wird bei der erfindungsgemäßen elektrisch betriebenen hydraulischen Antriebseinrichtung, welche ausgebildet ist, um von einer Steuereinrichtung Steuerbefehle zu erhalten und die zumindest einen Hydraulikeingang und zumindest einen Hydraulikausgang umfasst, als Pumpe eine Zahnrad-, Drehkolben- oder eine Kreiskolbenpumpe zur Erzeugung der Hydraulikversorgung vorgesehen, welche mittelbar oder unmittelbar von einem Servomotor beaufschlagt wird und ohne Zwischenschaltung einer Steuer-Ventileinrichtung unmittelbar mit dem Hydraulikausgang oder mit dem zu beaufschlagenden Element der Schließeinrichtung verbunden ist. Vielmehr wird anstelle des üblichen SteuerVentils ein einfaches Richtungsventil verwendet, welches lediglich die Flussrichtung bestimmt, aber keine Drosselwirkung besitzt. Die Steuerung an sich wird über die entsprechende Beaufschlagung des Servomotors geleistet. Die Pumpe ist dabei vorzugsweise als Konstantpumpe ausgebildet.

Eine Zahnrad-, Drehkolben- oder Kreiskolbenpumpe hat den Vorteil, dass sie einen Druck in ausreichendem Maße erzeugen, zur Verfügung stellen und aufrechterhalten kann. Dieser Druck liegt dann im Wesentlichen bis zum Verbraucher unmittelbar an der nachfolgenden Hydraulikleitung und auch beim Verbraucher an. Bei Verwendung einer solchen Pumpe wird daher kein Steuer- oder Regelventil mit einer nachteiligen Drosselwirkung verwendet. Vielmehr kann anstelle der Steuer- oder Regelventile ein einfaches Richtungsventil gewählt werden. Der für den Verbraucher gewünschte Druck lässt sich unmittelbar über den Betrieb der Pumpe, also durch entsprechende Beaufschlagung des elektrischen Servomotors erreichen.

Ist eine Hydraulikversorgung in einem bestimmten Betriebszustand nicht notwendig, so muss die Elektromotor-Pumpe-Kombination auch nicht fortwährend betrieben werden, um beispielsweise einen bestimmten Öldruck aufrecht zu erhalten oder einen Speicher zu füllen. Vielmehr kann die Pumpe in diesem Leerlauf-Betrieb stillgesetzt sein.

Die vorliegende Lösungsvariante hat den Vorteil, dass das Nebenaggregat sehr einfach aufgebaut ist, da es faktisch nur aus einem Frequenzumrichter, einem Servomotor, einer Zahnrad-, Drehkolben- oder Kreiskolbenpumpe sowie eines einfachen Umschaltventils besteht und auf andere gesonderte Elemente verzichtet. Überdies sind die besagten Elemente leise und damit bedienfreundlich (Schallemissionsschutz).

Als weiterer Vorteil dieser Ausführungsform ist die geringe Menge an Hydraulikfluid, insbesondere Hydrauliköl zu nennen. Durch den besonders einfachen Aufbau sind auch die Kostengünstigkeit sowie die einfache Wartung ohne weiteres gewährleistet.

Die vorliegende Erfindung wird nachfolgend anhand eines konkreten Ausführungsbeispiels und mit Bezug auf die beigefügten Zeichnung näher erläutert. Die Zeichnung zeigt in
- Fig.1 1: eine schematische Darstellung einer Spritzgießmaschine mit zugehöriger Steuerung und Nebenaggregat in Form eines einfachen Blockbildes und in
- Fig. 2: einen Hydraulikschaltplan für eine Ausführungsform der vorliegenden Erfindung.

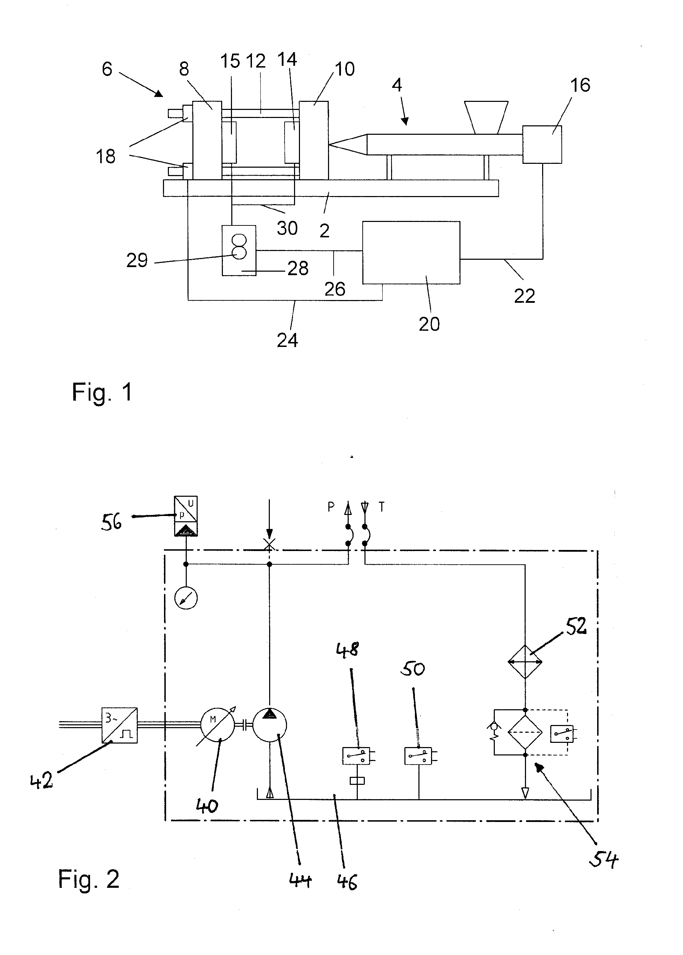

In Fig. 1 ist eine Spritzgießmaschine mit einer Plastifiziereinheit 4 sowie einer Schließeinheit 6 dargestellt. Die Plastifiziereinheit 4 umfasst vorliegend eine Plastifizier- und Einspritzeinrichtung mit einem Spritzgießzylinder und einer darin aufgenommenen Schubschnecke (nicht dargestellt), die mittels eines elektrischen Antriebs 16 sowohl rotatorisch wie auch axial angetrieben werden kann.

Zur Zufuhr eines Materials ist ein Trichter vorgesehen, über den das Material eingefüllt wird, um es in der Plastifiziereinheit aufzuschmelzen und dann in eine noch zu beschreibende Kavität einzuspritzen.

Auf dem Maschinenbett 2 ist in der Figur links neben der Plastifiziereinheit 4 die Schließeinheit 6 abgebildet. Diese umfasst eine feste Formaufspannplatte 10 sowie eine hin und her bewegliche Formaufspannplatte 8, wobei der Antrieb für die Formaufspannplatte 8 vorliegend über elektrisch betriebene Spindel-Mutter-Systeme realisiert ist. Jedoch ist auch jederzeit eine andere bekannte Art eines elektrischen Antriebs für die Schließeinheit alternativ zu verwenden. In der Figur sind mit dem Bezugszeichen 18 elektrische Antriebe für die Mutter gekennzeichnet.

Die Spindeln sind integral in einem entsprechenden Abschnitt der Holme 12 zwischen den beiden Aufspannplatten 8 und 10 realisiert. Auf den Aufspannplatten sind zwei Werkzeughälften 14 und 15 vorgesehen, die in der Figur in geöffnetem Zustand dargestellt sind. Die beiden Werkzeughälften können durch Zusammenfahren der beiden Aufspannplatten 8 und 10 zur Ausbildung einer Kavität geschlossen werden. In diese geschlossene Kavität kann dann die in der Plastifiziereinheit 4 hergestellte Schmelze eingebracht werden. Bei bestimmten Produkten ist es erforderlich, die Kavität durch das Einfahren von Schiebern oder Kernzügen zu bilden.

Solche Schieber oder Kernzüge sind vorliegend ebenfalls in den beiden Werkzeughälften 14 und 15 vorgesehen, jedoch nicht im Einzelnen dargestellt. Sie werden angetrieben über ein elektrisch betriebenes Hydraulikaggregat in Form eines Nebenaggregats 28.

Dieses Nebenaggregat 28 weist vorliegend eine Zahnradpumpe 29 auf, die von einem in Fig. 2 noch zu beschreibenden elektrischen Antrieb unmittelbar beaufschlagt wird. Das Nebenaggregat 28 besitzt eine Hydraulikverbindung 30 zu den beiden Aufspannplatten 14 und 15, wobei in dieser Hydraulikleitung 30 sowohl Hydraulikzufuhr wie auch Hydraulikrückfuhr zu bzw. von den Werkzeughälften 14 und 15 vorgesehen sind.

Die konkrete Ausführungsform des elektrisch betriebenen Hydraulikaggregates ist in Fig. 2 dargestellt. Ein Servomotor 40 wird über einen Frequenzumrichter 42 in gewünschter Weise beaufschlagt und angetrieben. Der Servomotor ist 40 mit einer Konstantpumpe 44 (hier einer Zahnradpumpe) verbunden, die entsprechend dem Betrieb des Servomotors 40 einen Hydraulikfluidstrom fördert. Die Konstantpumpe 44 ist mit einer Betätigungseinrichtung (hier dem Kernzug) verbunden (in Fig. 2 nicht im Einzelnen dargestellt. Zwischen der Betätigungseinrichtung und der Pumpe ist noch ein nicht dargestelltes Richtungsventil geschaltet, welche die Hydraulikströmungsrichtung zur Betätigungseinrichtung bzw. von der Betätigungseinrichtung festlegt. Das Richtungsventil hat jedoch lediglich Schaltfunktion und keine Drosselwirkung. Beim Betrieb fördert die Pumpe entsprechend dem Betrieb des Servomotors 40 das Hydraulikfluid aus einem Behälter 46 über den Anschluss "P" zum Kernzug, so dass dieser beaufschlagt wird. Der dabei vorliegende Druck wird über den Drucksensor 56 erfasst und an die Steuerung 20 weitergeleitet. Über den Anschluss "T" wird das Hydraulikfluid unter Zwischenschaltung eines Wärmetauschers und einer Filtereinheit 54 an den Behälter 46 zurückgeführt. Um den Hydraulik-Niveaustand im Behälter erfassen zu können, ist überdies noch ein entsprechender Sensor 48 vorgesehen. Überdies wird auch die Temperatur über einen Temperaturfühler 50 erfasst.

Entsprechend des abzuarbeitenden Programms und auf Basis des über den Drucksensor 56 erfassten Druckes wird der Servomotor 40 mittels des mit der Steuereinrichtung 20 beaufschlagten Frequenzumrichters 42 betrieben. Das Nebenaggregat (bzw. hier der Kernzug) wird unmittelbar über den durch den elektrischen Servomotor erzeugte Druck über die Steuerleitung 26 beaufschlagt, ohne dass Drosselverluste in einem Regelventil auftreten.

Die Steuereinrichtung 20 beaufschlagt überdies die elektrischen Antriebe 16 sowie 18.

Ist im Verlauf des Betriebes der Spritzgießmaschine eine Betätigung der Kernzüge erforderlich, um beispielsweise die Kernzüge in die Form einzufahren und gegen einen Einspritzdruck zu halten oder vor dem Auseinanderfahren der Formaufspannplatten 8 und 10 die Kernzüge aus der Form auszufahren, so beaufschlagt die Steuereinrichtung über die Steuerleitung 26 das vorbeschriebene elektrisch betriebene Nebenaggregat und darin die Zahnradpumpe über den elektrischen Servomotor entsprechend, so dass durch den entsprechenden Betrieb in gewünschter Weise ein Druck aufgebaut wird. Dieser Druck wird ohne Zwischenschaltung eines Regel-Ventils unmittelbar den jeweiligen Komponenten (hier Kernzüge) im Werkzeug zur Verfügung gestellt, so dass die Drucksteuerung entsprechend der jeweiligen Ansteuerung des Motors möglich ist.

Auf diese Art und Weise kann ein besonders einfaches Nebenaggregat, das überdies leise ist und wenig Öl aufweist, zur Verfügung gestellt werden.

### Bezugszeichenliste

- 2: Maschinenbett
- 4: Plastifiziereinheit
- 6: Schließeinheit
- 8: Bewegliche Aufspannplatte
- 10: Feste Aufspannplatte
- 12: Zugholme mit Spindel am Ende
- 14: Erste Werkzeughälfte
- 15: Zweite Werkzeughälfte
- 16: Elektrischer Antrieb für Plastifiziereinheit
- 18: Elektrischer Antrieb mit Mutter
- 20: Steuereinrichtung
- 22: Erste Versorgungs- und Steuerleitung
- 24: Zweite Versorgungs- und Steuerleitung
- 26: Steuerleitung
- 28: Nebenaggregat
- 29: Zahnradpumpe
- 30: Hydraulikleitung
- 40: Servomotor
- 42: Frequenz-Umrichter
- 44: Konstantpumpe
- 46: Behälter
- 48: Sensor für Hydraulikfluidniveau
- 50: Temperaturfühler
- 52: Wärmetauscher
- 54: Filtereinheit
- 56: Druckaufnehmer

## Patentansprüche

1. Elektrisch betriebene hydraulische Antriebseinrichtung für eine Spritzgießmaschine, die ausgebildet ist, um von einer Steuereinrichtung Steuerbefehle zu erhalten und die zumindest einen Hydraulikeingang und zumindest einen Hydraulikausgang umfasst, wobei der Hydraulikausgang mittels einer Hydraulikleitung mit zumindest einer Betätigungseinrichtung der Spritzgießmaschine verbunden ist, wobei eine Zahnrad-, Drehkolben- oder eine Kreiskolbenpumpe zur Erzeugung der Hydraulikversorgung vorgesehen und die Zahnrad-, Drehkolben- oder Kreiskolbenpumpe von einem Servomotor beaufschlagt ist,
**dadurch gekennzeichnet, dass**
dass die Zahnrad-, Drehkolben- oder Kreiskolbenpumpe unter Zwischenschaltung einer die Flussrichtung bestimmenden Richtungs-Ventileinrichtung unmittelbar mit einer Betätigungseinrichtung verbunden ist, wobei die Richtungs-Ventileinrichtung die Hydraulikströmungsrichtung zur Betätigungseinrichtung oder von der Betätigungseinrichtung festlegt.

2. Elektrisch betriebene hydraulische Antriebsvorrichtung nach Anspruch 1,
**dadurch gekennzeichnet,**
**dass** die Zahnrad-, Drehkolben- oder eine Kreiskolbenpumpe zum diskontinuierlichen Betrieb ausgelegt ist.

3. Elektrisch betriebene hydraulische Antriebsvorrichtung nach Anspruch 1 oder 2,
**dadurch gekennzeichnet,**
**dass** ein Hydraulikeingang vorgesehen ist, um das Hydraulikfluid von einem Behältnis aufzunehmen.

4. Elektrisch betriebene hydraulische Antriebsvorrichtung nach einem der vorhergehenden Ansprüche,
**dadurch gekennzeichnet,**
**dass** die Betätigungseinrichtung in der Schließeinheit der Spritzgießmaschine, insbesondere als Kernzug oder Auswerfer eines Werkzeugs ausgestaltet ist.
